# EUROPEAN PATENT SPECIFICATION

(11) **EP 3 916 854 B1**
(45) Date of publication and mention of the grant of the patent: **17.01.2024**
(21) Application number: 21176333.9
(22) Date of filing: 27.05.2021
(51) Int. Cl.: H01M 4/36, H01M 4/131, H01M 4/64, H01M 10/052

(54) **ELECTRODE PLATE AND BATTERY**
ELEKTRODENPLATTE UND BATTERIE
PLAQUE D'ÉLECTRODE ET BATTERIE

(30) Priority: 27.05.2020 US 202063030506 P
(43) Date of publication of application: 01.12.2021
(73) Proprietor: Industrial Technology Research Institute, Chutung, Hsinchu 310401 (TW)
(72) Inventor: YEH, Sheng-Fa, Miaoli County (TW); SHIEH, Deng-Tswen, Hsinchu City (TW); CHEN, Ching-Yu, Hualien County (TW); LIAO, Shih-Chieh, Taoyuan City (TW); HUANG, Hao-Tzu, Taichung City (TW)
(74) Representative: Michalski Hüttermann & Partner Patentanwälte mbB

(56) References cited:
- EP-A1- 3 070 769
- EP-A1- 3 273 517
- WO-A1-2013/175991
- KR-A- 20150 016 018
- US-A1- 2015 270 544
- US-A1- 2016 006 033

## Description

### TECHNICAL FIELD

The technical field relates to a battery, and in particular it relates to active material layers on two sides of the electrode plates for a battery.

### BACKGROUND

Although the conventional mainstream carbon negative electrode material has excellent capacitance (about 350 mAh/g), it still has problems with its cycle lifespan, safety, and fast chargeability. The lithium titanate (Li₄Ti₅Oₗ₂, LTO) is a fast chargeable negative electrode material with a long lifespan and a high safety performance, however, it has a lower capacitance (about 165 mAh/g). Titanium niobate (TiNb₂O₇, TNO) has a higher theoretical capacitance (about 380 mAh/g), a working potential of 1.6 V to prevent growth of lithium dendrite, and excellent safety, which makes it a suitable candidate for being the fast chargeable negative electrode of the next generation. In addition, the titanium niobate has excellent performance at low temperatures and can adapt to any harsh environment. However, the titanium niobate has poor electrical conductivity and cycle lifespan, and it should be further modified to achieve a better level of performance if it is used in power lithium batteries.

EP 3070769 A1 describes an electrode including a current collector, a first electrode mixture layer formed on the current collector, and a second electrode mixture layer formed on the first electrode mixture layer.

EP 3273517 A1 describes a nonaqueous electrolyte battery including a positive electrode, a negative electrode, and a nonaqueous electrolyte.

KR 20150016018 A describes an electrode having different electrode active materials applied to both surfaces of a collector plate and an electrode assembly including same.

US 2016/006033 A1 describes a lithium battery including a cathode, an anode, and a separator between the cathode and the anode.

In order to address the issue of the poor cycle lifespan of the full cell made of TNO material, the TNO powder can be wrapped in carbon material and then sintered, the substrate can be coated with carbon material and then coated by TNO, or an additive can be added to the electrolyte. However, the cost of TNO powder wrapped in carbon material and then sintered is greatly increased. If the substrate is coated with carbon material and then coated by TNO, the effect of improving the cycle lifespan will be limited or have no effect. As for adding an additive to the electrolyte, the electrical properties of TNO material will be degraded. Accordingly, a novel method is called for to overcome the above issues.

### SUMMARY

The invention is defined by the features of the independent claim.

One embodiment of the disclosure provides a negative electrode plate according to claim 1, which includes a metal foil, a first active material layer, and a second active material layer. The first active material layer disposed directly on the top surface of the metal foil. The second active material layer is disposed directly on the bottom surface of the metal foil. The crystalline system of the first active material layer is different from that of the second active material layer.

One embodiment of the disclosure provides a battery that includes a positive electrode plate, a negative electrode as described in claim 1, and a separator film. The separator film is disposed between the positive electrode plate and the negative electrode plate. The positive electrode plate, the negative electrode plate, and the separator film are immersed in an electrolyte. At least one of the positive electrode plate and the negative electrode plate includes a metal foil, a first active material layer, and a second active material layer. The first active material layer is disposed directly on the top surface of the metal foil. The second active material layer is disposed directly on the bottom surface of the metal foil. The crystalline system of the first active material layer is different from that of the second active material layer.

A detailed description is given in the following embodiments with reference to the accompanying drawings.

### BRIEF DESCRIPTION OF THE DRAWINGS

The disclosure can be more fully understood by reading the subsequent detailed description and examples with references made to the accompanying drawings, wherein:
Fig. 1 shows cycle test results of different batteries in the Example and the Comparative Examples of the disclosure.
Fig. 2 shows cycle test results of different batteries in the Example and the Comparative Example of the disclosure.

### DETAILED DESCRIPTION

In the following detailed description, for the purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

One embodiment of the disclosure provides an electrode plate that includes a metal foil, a first active material layer, and a second active material layer. The first active material layer is disposed directly on the top surface of the metal foil. The second active material layer is disposed directly on the bottom surface of the metal foil. The crystalline system of the first active material layer is different from that of the second active material layer. If the crystalline system of the first active material layer is the same as that of the second active material layer, currents distributed in the first active material layer and the second active material layer of the electrode plate will not be different when the battery (described below) is charged or discharged, thereby failing to adjust the capacitance of the battery and extend the cycle lifespan of the battery.

When the electrode is a negative electrode plate, each of the first active material layer and the second active material layer independently includes lithium titanate (LTO) with spinel structure, titanium niobate (TNO) with monoclinic crystal system, soft carbon with amorphous structure, hard carbon with amorphous structure, or graphite with hexagonal crystal system. According to the present invention, the first active material layer of the negative electrode plate includes LTO with spinel structure, while the second active material layer includes TNO with monoclinic crystal system.

In one embodiment not according to the present invention, the electrode plate is a positive electrode plate, in which the first active material layer and the second active material layer each includes lithium manganese iron phosphate with olivine structure, lithium iron phosphate with olivine structure, lithium nickel manganese cobalt oxide with layered structure, lithium nickel cobalt aluminum oxide with layered structure, lithium cobalt oxide with layered structure, or lithium manganese oxide with spinel structure. For example, the first active material layer of the positive electrode plate may include lithium manganese iron phosphate with olivine structure, while the second active material layer may include lithium nickel manganese cobalt oxide with layered structure.

In some embodiments, the metal foil includes copper, aluminum, titanium, aluminum alloy, copper alloy, or titanium alloy. In general, the metal foil can serve as the current collector of the electrode plate structure.

One embodiment of the disclosure provides a battery, including a positive electrode plate, a negative electrode plate, and a separator film disposed between the positive electrode plate and the negative electrode plate. The positive electrode plate, the negative electrode plate, and the separator film are immersed in an electrolyte. The separator film can be porous polymer such as polyethylene, polypropylene, a blend thereof, a multi-layered structure thereof, or a ceramic coating. The electrolyte can be liquid state or gel state (e.g. lithium salt dissolved in one or more non-aqueous solvent). In one embodiment, the lithium salt in the electrolyte is dissolved in carbonate solvent or ether solvent, such as lithium hexafluorophosphate (LiPF₆) dissolved in ethylene carbonate (EC) and dimethyl carbonate (DMC). In another embodiment, the electrolyte can be ionic liquid, such as N-methyl-N-alkylpyrrolidinium bis(trifluoromethyl sulfonyl)imide salt. The electrolyte can also be solid electrolyte, such as lithium ion conducting glass (e.g. lithium phosphorus oxynitride, LiPON). In another embodiment, the electrolyte may include polyvinylidene difluoride (PVDF) copolymer, PVDF-polyimide material, organosilicon polymer, thermal polymerization gel, radiation cured acrylate, polymer gel-containing particles, inorganic gel polymer electrolyte, inorganic gel-polymer electrolyte, PVDF gel, polyethylene oxide, glass ceramic electrolyte, phosphate glass, lithium conducting glass, lithium conducting ceramic, or inorganic ionic liquid gel.

At least one of the positive electrode plate and the negative electrode plate includes a metal foil, a first active material layer, and a second active material layer. The first active material layer is disposed directly on the top surface of the metal foil. The second active material layer is disposed directly on the bottom surface of the metal foil. The crystalline system of the first active material layer is different from that of the second active material layer.

In one embodiment, the first active material layer and the second active material layer of the negative electrode plate have different crystalline systems. The active material layers on two sides of the positive electrode plate are the same (e.g. they both include lithium manganese iron phosphate with olivine structure, lithium iron phosphate with olivine structure, lithium nickel manganese cobalt oxide with layered structure, lithium nickel cobalt aluminum oxide with layered structure, lithium cobalt oxide with layered structure, or lithium manganese oxide with spinel structure). When the battery is charged or discharged, the active material layer on the top surface of the positive electrode plate has a first voltage difference (ΔVa) with respect to the first active material layer of the negative electrode plate, the active material layer on the bottom surface of the positive electrode plate has a second voltage difference (ΔVb) with respect to the second active material layer of the negative electrode plate. As a result, the currents distributed in the first active material layer and the second active material layer of the negative electrode plate are different, which may adjust the capacitance of the battery and extend the cycle lifespan of the battery.

In another embodiment, the first active material layer and the second active material layer of the negative electrode plate have different crystalline systems, and the active material layers on two sides of the positive electrode plate are different. When the battery is charged or discharged, the active material layer on the top surface of the positive electrode plate has a first voltage difference (ΔVa1) with respect to the first active material layer of the negative electrode plate, the active material layer on the bottom surface of the positive electrode plate has a second voltage difference (ΔVa2) with respect to the first active material layer of the negative electrode plate, the active material layer on the top surface of the positive electrode plate has a third voltage difference (ΔVb1) with respect to the second active material layer of the negative electrode plate, and the active material layer on the bottom surface of the positive electrode plate has a fourth voltage difference (ΔVb2) with respect to the second active material layer of the negative electrode plate. As a result, the currents distributed in the active materials on the two sides of the positive electrode plate and the first active material layer and the second active material layer of the negative electrode plate are different, which may adjust the capacitance of the battery and extend the cycle lifespan of the battery.

In some embodiments not according to the invention, the first active material layer and the second active material layer of the positive electrode plate have different crystalline systems, and the active material layers on two sides of the negative electrode plate are the same (e.g. both include lithium titanate (LTO) with spinel structure, titanium niobate (TNO) with monoclinic crystal system, soft carbon with amorphous structure, hard carbon with amorphous structure, or graphite with hexagonal crystal system). When the battery is charged or discharged, the active material layer on the top surface of the positive electrode plate has a first voltage difference (ΔVc) with respect to the negative electrode plate, and the active material layer on the bottom surface of the positive electrode plate has a second voltage difference (ΔVd) with respect to the negative electrode plate. As a result, the currents distributed in the active materials on the two sides of the positive electrode plate are different, which may adjust the capacitance of the battery and extend the cycle lifespan of the battery.

Below, exemplary embodiments will be described in detail with reference to accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### EXAMPLES

In the following Examples, the LTO with spinel structure was KPT-2 commercially available from Anhui Keda Borui Energy Technology Co Ltd, and TNO with monoclinic crystal system was prepared according to Taiwan Patent No. I705952.

### Example 1 (Negative electrode plate, LTO/TNO)

95 wt% of lithium nickel manganese cobalt oxide with layered structure (NMC-111, powder material commercially available from Shenzhen Tianjiao Technology Development Co Ltd.), 3 wt% of conductive carbon powder, and 2 wt% of PVDF binder were mixed to form a paste, and then coated on the top surface and the bottom surface of an aluminum foil to form a positive electrode plate. 92 wt% of the LTO powder material with spinel structure, 3.1 wt% of conductive carbon powder, and 4.9 wt% of PVDF binder were mixed to form a paste, and then coated on the top surface of another aluminum foil. In addition, 92.5 wt% of the TNO powder material with monoclinic crystal system, 4 wt% of the conductive carbon powder, and 3.5 wt% of the PVDF binder were mixed to form a paste, and then coated on the bottom surface of the other aluminum foil to form a negative electrode plate. The NMC active material of the positive electrode had a coating weight per unit area of 0.0143 g/cm², the TNO active material on the bottom surface of the negative electrode plate had a coating weight per unit area of 0.0115 g/cm², and the LTO active material on the top surface of the negative electrode had a coating weight per unit area of 0.0232 g/cm².

The positive electrode plate was cut to a size of 55 mm x 750 mm (width x length), and the negative electrode plate was cut to a size of 57 mm x 800 mm (width x length). The coating layers with a length of 1 cm at front and back ends of the positive electrode plate and the negative electrode plate were washed out, and conductive handles were welded on the washed ends. A polyethylene separator film with a width of 60.5 mm and a thickness of 16 µm was interposed between the positive electrode plate and the negative electrode plate, and then rolled up. The rolled structure was put into an aluminum foil bag, and an electrolyte was injected into the bag. The bag was then sealed to complete the so-called battery. The electrolyte included 1.2 M LiPF₆, in which the solvent was ethylene carbonate and dimethyl carbonate (EC/DMC).

The battery formation process was performed for the assembled battery as below: the battery was charged to 3.0 V by a current of 0.1 C until the constant current and constant voltage being less than 0.01 C (and stop charge). The battery was then discharged to 1.5 V by a current of 0.1 C. Thereafter, the charge and discharge cycle was repeated three times to obtain a capacitance value of the battery. After the charge and discharge cycle of the current of 0.1 C, the 0.1 C discharge capacitance of the battery was 1.63 Ah, the average working voltage of the battery was 2.27 V, and the battery weight was 45 g. As such, the energy density of the battery was 82.2 Wh/Kg.

The battery was charged by a current of 0.5 C at room temperature in a constant current and constant voltage (CC-CV) mode, the charge and discharge voltage range was 1.5 V to 3V, and the charging cut-off current was 0.01 C. The fully charged battery was discharged by different rates (e.g. currents of 0.5 C, 1 C, 3 C, 5 C, 7 C, and 10 C), respectively, to evaluate the discharge ability of the battery. On the other hand, the battery was firstly discharged to 1.5 V by a current of 0.5 C, and then charged by different rates (e.g. currents of 0.5 C, 1 C, 3 C, 5 C, 7 C, and 10 C), respectively, to analyze the charge capacitances of the battery under the different constant currents, thereby evaluating the charge ability of the battery. The charge and discharge abilities of the battery are shown in Table 1.

**Table 1**

| Discharge ability | Capacitance (Ah) | Discharge ability (%) |
|---|---|---|
| 0.5 C charge/0.5 C discharge | 1.546 | 100 |
| 0.5 C charge/1 C discharge | 1.495 | 96.7 |
| 0.5 C charge/3 C discharge | 1.408 | 91.1 |
| 0.5 C charge/5 C discharge | 1.370 | 88.6 |
| 0.5 C charge/7 C discharge | 1.332 | 86.2 |
| 0.5 C charge/10 C discharge | 1.272 | 82.3 |
| | | |

| Charge ability (Charged to 3V by a constant current) | Constant current capacitance (Ah) | Charge ability (%) |
|---|---|---|
| 0.5 C charge/0.5 C discharge | 1.47 | 100 |
| 1 C charge/0.5 C discharge | 1.43 | 97.7 |
| 3 C charge/0.5 C discharge | 1.36 | 93.1 |
| 5 C charge/0.5 C discharge | 1.31 | 89.4 |
| 7 C charge/0.5 C discharge | 1.24 | 84.5 |
| 10 C charge/0.5 C discharge | 1.14 | 77.8 |

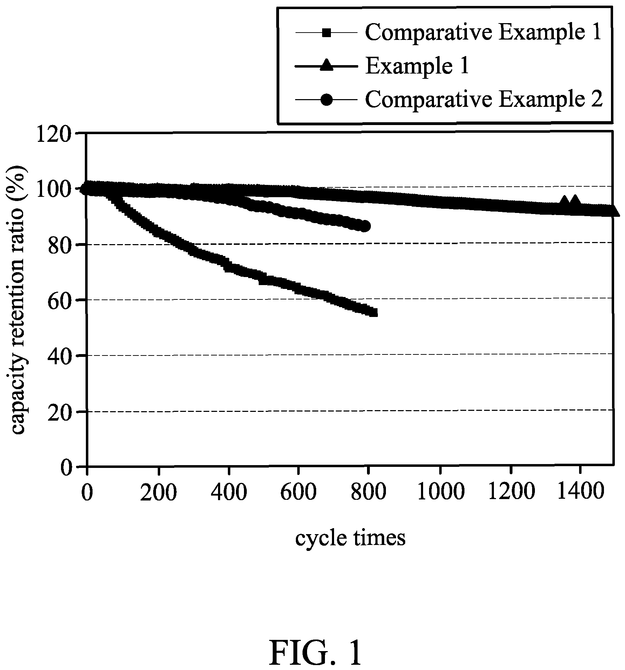

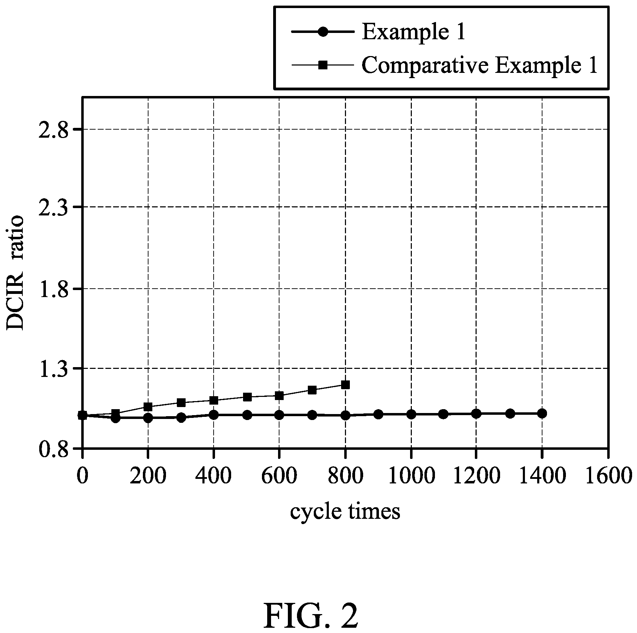

At 25°C, the battery was charged to 3.0 V by a current of 5C, then kept for 20 minutes, then discharged to 1.5 V by a current of 5C, and then kept for 20 minutes. Thereafter, the above cycle lifespan test was repeated. The capacity retention ratio of the battery was higher than 90% after 1500 cycles, as shown in Fig. 1. The battery after every 100 cycles was charged and discharged by a current of 0.5 C under the constant current and constant voltage (CC-CV) mode (in which the voltage range was 1.5 V to 3V, and the cut-off current of the constant voltage was 0.01 C) to determine the capacitance of the battery. In addition, the battery after every 100 cycles was fully charged by a current of 0.5 C, kept for 1 hour, and then discharged by a current of 1 C for 10 seconds. The direct current internal resistance (DCIR, 1C-10s) of the battery could be calculated from the voltage difference before and after the discharge for 10 seconds. The DCIR of the battery was not obviously increased after 1400 cycles, as shown in Fig. 2. Obviously, the battery of Example 1 had a long cycle lifespan.

### Comparative Example 1 (Negative electrode plate, TNO/TNO)

95 wt% of lithium nickel manganese cobalt oxide with layered structure (NMC-111, powder material commercially available from Shenzhen Tianjiao Technology Development Co Ltd.), 3 wt% of conductive carbon powder, and 2 wt% of PVDF binder were mixed to form a paste, and then coated on the top surface and the bottom surface of an aluminum foil to form a positive electrode plate. 92.5 wt% of the TNO powder material with monoclinic crystal system, 4 wt% of the conductive carbon powder, and 3.5 wt% of the PVDF binder were mixed to form a paste, and then coated on the top surface and the bottom surface of another aluminum foil to form a negative electrode plate. The NMC active material of the positive electrode had a coating weight per unit area of 0.0143 g/cm², and the TNO active material of the negative electrode plate had a coating weight per unit area of 0.0115 g/cm².

The positive electrode plate was cut to a size of 55 mm x 860 mm (width x length), and the negative electrode plate was cut to a size of 57 mm x 900 mm (width x length). The coating layers with a length of 1 cm at front and back ends of the positive electrode plate and the negative electrode plate were washed out, and conductive handles were welded on the washed ends. A polyethylene separator film with a width of 60.5 mm and a thickness of 16 µm was interposed between the positive electrode plate and the negative electrode plate, and then rolled up. The rolled structure was put into an aluminum foil bag, and an electrolyte was injected into the bag. The bag was then sealed to complete the so-called battery. The electrolyte included 1.2 M LiPF₆, in which the solvent was ethylene carbonate and dimethyl carbonate (EC/DMC).

The battery formation process was performed for the assembled battery as below: the battery was charged to 3.0 V by a current of 0.1 C until the constant current and constant voltage being less than 0.01 C (and stop charge). The battery was then discharged to 1.5 V by a current of 0.1 C. Thereafter, the charge and discharge cycle was repeated three times to obtain a capacitance value of the battery. After the charge and discharge cycle of the current of 0.1 C, the 0.1 C discharge capacitance of the battery was 1.98 Ah, and the average working voltage of the battery was 2.28 V.

The battery was charged by a current of 0.5 C at room temperature in a constant current and constant voltage (CC-CV) mode, the charge and discharge voltage range was 1.5 V to 3V, and the charging cut-off current was 0.01 C. The fully charged battery was discharged by different rates (e.g. currents of 0.5 C, 1 C, 3 C, 5 C, 7 C, and 10 C), respectively, to evaluate the discharge ability of the battery. On the other hand, the battery was firstly discharged to 1.5 V by a current of 0.5 C, and then charged by different rates (e.g. currents of 0.5 C, 1 C, 3 C, 5 C, 7 C, and 10 C), respectively, to analyze the charge capacitances of the battery under the different constant currents, thereby evaluating the charge ability of the battery. The charge and discharge abilities of the battery are shown in Table 2.

**Table 2**

| Discharge ability | Capacitance (Ah) | Discharge ability (%) |
|---|---|---|
| 0.5 C charge/0.5 C discharge | 1.96 | 100 |
| 0.5 C charge/1 C discharge | 1.83 | 93.4 |
| 0.5 C charge/3 C discharge | 1.75 | 89.2 |
| 0.5 C charge/5 C discharge | 1.72 | 87.7 |
| 0.5 C charge/7 C discharge | 1.69 | 86.3 |
| 0.5 C charge/10 C discharge | 1.62 | 82.7 |
| | | |
| Charge ability (Charged to 3V by a constant current) | Constant current Capacitance (Ah) | Charge ability (%) |
| 0.5 C charge/0.5 C discharge | 1.73 | 100 |
| 1 C charge/0.5 C discharge | 1.66 | 96.2 |
| 3 C charge/0.5 C discharge | 1.57 | 91.0 |
| 5 C charge/0.5 C discharge | 1.53 | 88.7 |
| 7 C charge/0.5 C discharge | 1.48 | 85.6 |
| 10 C charge/0.5 C discharge | 1.35 | 78.4 |

At 25°C, the battery was charged to 3.0 V by a current of 5C, then kept for 20 minutes, then discharged to 1.5 V by a current of 5C, and then kept for 20 minutes. Thereafter, the above cycle lifespan test was repeated. The capacity retention ratio of the battery in Comparative Example 1 was only about 55% after 800 cycles, as shown in Fig. 1. The battery after every 100 cycles was charged and discharged by a current of 0.5 C under the constant current and constant voltage (CC-CV) mode (in which the voltage range was 1.5 V to 3V, and the cut-off current of the constant voltage was 0.01 C) to determine the capacitance of the battery. In addition, the battery after every 100 cycles was fully charged by a current of 0.5 C, kept for 1 hour, and then discharged by a current of 1 C for 10 seconds. The direct current internal resistance (DCIR, 1C-10s) of the battery could be calculated from the voltage difference before and after the discharge for 10 seconds. The DCIR of the battery was increased about 30% after 300 cycles, as shown in Fig. 2. Obviously, the battery of Comparative Example 1 had a shorter cycle lifespan than the battery of Example 1.

### Comparative Example 2 (Negative electrode plate, LTO+TNO (4/6)/LTO+TNO (4/6))

95 wt% of lithium nickel manganese cobalt oxide with layered structure (NMC-111, powder material commercially available from Shenzhen Tianjiao Technology Development Co Ltd.), 3 wt% of conductive carbon powder, and 2 wt% of PVDF binder were mixed to form a paste, and then coated on the top surface and the bottom surface of an aluminum foil to form a positive electrode plate. 92 wt% of the LTO powder material with spinel structure and the TNO powder material with monoclinic crystal system (having a weight ratio of 4/6), 3.1 wt% of conductive carbon powder, and 4.9 wt% of PVDF binder were mixed to form a paste, and then coated on the top surface and the bottom surface of another aluminum foil to form a negative electrode plate. The NMC active material of the positive electrode had a coating weight per unit area of 0.0143 g/cm², and the LTO+TNO active materials of the negative electrode plate had a coating weight per unit area of 0.0117 g/cm².

The positive electrode plate was cut to a size of 55 mm x 750 mm (width x length), and the negative electrode plate was cut to a size of 57 mm x 800 mm (width x length). The coating layers with a length of 1 cm at front and back ends of the positive electrode plate and the negative electrode plate were washed out, and conductive handles were welded on the washed ends. A polyethylene separator film with a width of 60.5 mm and a thickness of 16 µm was interposed between the positive electrode plate and the negative electrode plate, and then rolled up. The rolled structure was put into an aluminum foil bag, and an electrolyte was injected into the bag. The bag was then sealed to complete the so-called battery. The electrolyte included 1.2 M LiPF₆, in which the solvent was ethylene carbonate and dimethyl carbonate (EC/DMC).

The battery formation process was performed for the assembled battery as below: the battery was charged to 3.0 V by a current of 0.1 C until the constant current and constant voltage being less than 0.01 C (and stop charge). The battery was then discharged to 1.5 V by a current of 0.1 C. Thereafter, the charge and discharge cycle was repeated three times to obtain a capacitance value of the battery. After the charge and discharge cycle of the current of 0.1 C, the 0.1 C discharge capacitance of the battery was 1.70 Ah, and the average working voltage of the battery was 2.27 V.

The battery was charged by a current of 0.5 C at room temperature in a constant current and constant voltage (CC-CV) mode, the charge and discharge voltage rage was 1.5 V to 3V, and the charging cut-off current was 0.01 C. The fully charged battery was discharged by different rates (e.g. currents of 0.5 C, 1 C, 3 C, 5 C, 7 C, and 10 C), respectively, to evaluate the discharge ability of the battery. On the other hand, the battery was firstly discharged to 1.5 V by a current of 0.5 C, and then charged by different rates (e.g. currents of 0.5 C, 1 C, 3 C, 5 C, 7 C, and 10 C), respectively, to analyze the charge capacitances of the battery under the different constant currents, thereby evaluating the charge ability of the battery. The charge and discharge abilities of the battery are shown in Table 3.

**Table 3**

| | | |
|---|---|---|
| Discharge ability | Capacitance (Ah) | Discharge ability (%) |
| 0.5 C charge/0.5 C discharge | 1.59 | 100 |
| 0.5 C charge/1 C discharge | 1.54 | 97.0 |
| 0.5 C charge/3 C discharge | 1.48 | 93.0 |
| 0.5 C charge/5 C discharge | 1.47 | 92.3 |
| 0.5 C charge/7 C discharge | 1.46 | 92.0 |
| 0.5 C charge/10 C discharge | 1.44 | 87.9 |
| | | |

| Charge ability (Charged to 3V by a constant current) | Constant current Capacitance (Ah) | Charge ability (%) |
|---|---|---|
| 0.5 C charge/0.5 C discharge | 1.45 | 100 |
| 1 C charge/0.5 C discharge | 1.40 | 96.6 |
| 3 C charge/0.5 C discharge | 1.33 | 91.7 |
| 5 C charge/0.5 C discharge | 1.31 | 90.3 |
| 7 C charge/0.5 C discharge | 1.29 | 89.2 |
| 10 C charge/0.5 C discharge | 1.25 | 86.1 |

At 25°C, the battery was charged to 3.0 V by a current of 5C, then kept for 20 minutes, then discharged to 1.5 V by a current of 5C, and then kept for 20 minutes. Thereafter, the above cycle lifespan test was repeated. The capacity retention ratio of the battery in Comparative Example 2 was only 85.6% after 800 cycles, as shown in Fig. 1. Obviously, the battery of Comparative Example 2 had a shorter cycle lifespan than the battery of Example 1.

It will be apparent to those skilled in the art that various modifications and variations can be made to the disclosed methods and materials. It is intended that the specification and examples be considered as exemplary only, with the true scope of the disclosure being indicated by the following claims.

## Claims

1. A negative electrode plate, comprising:
a metal foil;
a first active material layer directly disposed on a top surface of the metal foil; and
a second active material layer directly disposed on a bottom surface of the metal foil, wherein
a crystalline system of any active material in the first active material layer is different from a crystalline system of any active material in the second active material layer, and wherein
the first active material layer comprises lithium titanate with spinel structure, and the second active material layer comprises titanium niobate with monoclinic crystal system.

2. The electrode plate as claimed in claim 1, wherein the metal foil comprises aluminum, copper, titanium, aluminum alloy, copper alloy, or titanium alloy.

3. A battery, comprising:
a positive electrode plate;
a negative electrode plate as claimed in claim 1; and
a separator film disposed between the positive electrode plate and the negative electrode plate.

4. The battery as claimed in claim 3, wherein the active material layers on two sides of the positive electrode plate are the same and both comprise lithium manganese iron phosphate with olivine structure, lithium iron phosphate with olivine structure, lithium nickel manganese cobalt oxide with layered structure, lithium nickel cobalt aluminum oxide with layered structure, lithium cobalt oxide with layered structure, or lithium manganese oxide with spinel structure.

5. The battery as claimed in claim 3, wherein the active material layers on two sides of the positive electrode plate are different and each independently comprises lithium manganese iron phosphate with olivine structure, lithium iron phosphate with olivine structure, lithium nickel manganese cobalt oxide with layered structure, lithium nickel cobalt aluminum oxide with layered structure, lithium cobalt oxide with layered structure, or lithium manganese oxide with spinel structure.

6. The battery as claimed in claim 3, wherein the metal foil comprises aluminum, copper, titanium, aluminum alloy, copper alloy, or titanium alloy.

## Patentansprüche

1. Negative Elektrodenplatte, mit:
einer Metallfolie;
einer ersten Schicht aus aktivem Material, die direkt auf einer oberen Fläche der Metallfolie angeordnet ist; und
einer zweiten Schicht aus aktivem Material, die direkt auf einer unteren Fläche der Metallfolie angeordnet ist, wobei
sich ein kristallines System eines beliebigen aktiven Materials in der ersten Schicht aus aktivem Material von einem kristallinen System eines beliebigen aktiven Materials in der zweiten Schicht aus aktivem Material unterscheidet, und wobei
die erste Schicht aus aktivem Material Lithiumtitanat mit einer Spinellstruktur aufweist und die zweite Schicht aus aktivem Material Titanniobat mit einem monoklinen Kristallsystem aufweist.

2. Elektrodenplatte nach Anspruch 1, wobei die Metallfolie Aluminium, Kupfer, Titan, eine Aluminiumlegierung, eine Kupferlegierung oder eine Titanlegierung aufweist.

3. Batterie, mit:
einer positiven Elektrodenplatte;
einer negativen Elektrodenplatte nach Anspruch 1; und
einem zwischen der positiven Elektrodenplatte und der negativen Elektrodenplatte angeordneten Separatorfilm.

4. Batterie nach Anspruch 3, wobei die Schichten aus aktivem Material auf zwei Seiten der positiven Elektrodenplatte die gleichen sind und beide Lithium-Mangan-Eisenphosphat mit einer Olivinstruktur, Lithium-Eisenphosphat mit einer Olivinstruktur, Lithium-Nickel-Mangan-Kobaltoxid mit einer Schichtstruktur, Lithium-Nickel-Kobalt-Aluminiumoxid mit einer Schichtstruktur, Lithium-Kobaltoxid mit einer Schichtstruktur oder Lithium-Manganoxid mit einer Spinellstruktur aufweisen.

5. Batterie nach Anspruch 3, wobei die Schichten aus aktivem Material auf zwei Seiten der positiven Elektrodenplatte unterschiedlich sind und jeweils unabhängig voneinander Lithium-Mangan-Eisenphosphat mit einer Olivinstruktur, Lithium-Eisenphosphat mit einer Olivinstruktur, Lithium-Nickel-Mangan-Kobaltoxid mit einer Schichtstruktur, Lithium-Nickel-Kobalt-Aluminiumoxid mit einer Schichtstruktur, Lithium-Kobaltoxid mit einer Schichtstruktur oder Lithium-Manganoxid mit einer Spinellstruktur aufweisen.

6. Batterie nach Anspruch 3, wobei die Metallfolie Aluminium, Kupfer, Titan, eine Aluminiumlegierung, eine Kupferlegierung oder eine Titanlegierung aufweist.

## Revendications

1. Plaque d'électrode négative, comprenant :
une feuille métallique ;
une première couche de matériau actif directement disposée sur une surface supérieure de la feuille métallique ; et
une seconde couche de matériau actif directement disposée sur une surface inférieure de la feuille métallique, dans laquelle
un système cristallin de n'importe quel matériau actif dans la première couche de matériau actif est différent d'un système cristallin de n'importe quel matériau actif dans la seconde couche de matériau actif, et dans lequel
la première couche de matériau actif comprend du titanate de lithium avec une structure de spinelle, et la seconde couche de matériau actif comprend du niobate de titane avec un système cristallin monoclinique.

2. Plaque d'électrode selon la revendication 1, dans laquelle la feuille métallique comprend de l'aluminium, du cuivre, du titane, un alliage d'aluminium, un alliage de cuivre, ou un alliage de titane.

3. Batterie, comprenant :
une plaque d'électrode positive ;
une plaque d'électrode négative selon la revendication 1 ; et
un film séparateur disposé entre la plaque d'électrode positive et la plaque d'électrode négative.

4. Batterie selon la revendication 3, dans laquelle les couches de matériau actif sur les deux côtés de la plaque d'électrode positive sont identiques et comprennent toutes deux du phosphate de lithium-manganèse-fer avec une structure d'olivine, du phosphate de lithium-fer avec une structure d'olivine, un oxyde de lithium-nickel-manganèse-cobalt avec une structure en couches, un oxyde de lithium-nickel-cobalt-aluminium avec une structure en couches, un oxyde de lithium-cobalt avec une structure en couches, ou un oxyde de lithium-manganèse avec une structure de spinelle.

5. Batterie selon la revendication 3, dans laquelle les couches de matériau actif sur les deux côtés de la plaque d'électrode positive sont différentes et et chacune comprend indépendamment du phosphate de lithium-manganèse-fer avec une structure d'olivine, du phosphate de lithium-fer avec une structure d'olivine, un oxyde de lithium-nickel-manganèse-cobalt avec une structure en couches, un oxyde de lithium-nickel-cobalt-aluminium avec une structure en couches, un oxyde de lithium-cobalt avec une structure en couches, ou un oxyde de lithium-manganèse avec une structure de spinelle.

6. Batterie selon la revendication 3, dans laquelle la feuille métallique comprend de l'aluminium, du cuivre, du titane, un alliage d'aluminium, un alliage de cuivre, ou un alliage de titane.
